# EUROPEAN PATENT APPLICATION

(11) **EP 0 677 831 A2**
(43) Date of publication of application: **18.10.1995**
(21) Application number: 95302303.3
(22) Date of filing: 06.04.1995
(51) Int. Cl.: G09B 29/10, G09B 29/00, G02B 25/02

(54) **Device adapted to be placed on a surface**

(30) Priority: 08.04.1994 GB 9406984; 17.03.1995 GB 9505408
(71) Applicant: Dixon, Thomas Gilroy Shaw, Bromsgrove, Worcestershire B61 7ED (GB)
(72) Inventor: Dixon, Thomas Gilroy Shaw, Bromsgrove, Worcestershire B61 7ED (GB)
(74) Representative: Lucking, David John

(57) **Abstract**

A device (10) adapted to be placed on a generally horizontal surface (11) and retained in a set position on the surface (11) comprises a body (12) having secured on its underside one or more pads (20) comprising a polymer with sticky properties which is solid at room temperature. The body (12) comprises an element of transparent plastics material which may be substantially planar.

## Description

### Description of Invention

This invention relates to a device adapted to be placed on a surface which is horizontal, or is inclined to the horizontal by up to 90°, and temporarily retained in a set position on the surface.

The invention has been developed particularly, but not exclusively, in relation to a device to facilitate the reading of text printed on a surface, such as a map, or a printed page.

Reading a map in a vehicle whilst travelling along can be difficult. A particular difficulty is relocating a portion of the map having taken ones eyes off the map. In the dark, it is nearly impossible to read a map.

According to the invention I provide a device adapted to be placed on a surface and temporarily retained in a set position on the surface, the device having secured on its underside by securing means, one or more elements comprising a polymer with sticky properties which is solid at room temperature.

Such a device may be used simply to mark a particular location on the map, in which case the device may have, for example, or be in the configuration of, a pointer. The device may comprise a body which may include a lens which is adapted to magnify text printed on the surface beneath the body.

In each case, the device may be removed from the surface and relocated when desired without causing damage to the surface. Furthermore, the device will remain in its set position on the surface withstanding that the surface may be vibrated, or moved.

In one example, the body comprises a substantially planar element of a plastics material such as Perpsex (Registered Trade Mark) or the like and any lens, may thus be integrally formed in the body.

In any event, the body may be generally transparent.

The securing means may comprise an adhesive to bond the element(s) to the body, or may comprise some mechanical interlocking means which secures the element(s) to the body.

In a preferred arrangement, the device may include a housing part containing a light source such that the surface beneath the device can be illuminated to facilitate reading. The housing may incorporate its own battery power supply, or means may be provided to deliver power to the light source from a remote location. For example in a motor car, power may be delivered to the light source from, for example, a cigarette lighter or other power point within the vehicle via a cable.

Various kinds of polymers may be appropriate for the element(s). The essential qualities of the polymer are that it is sufficiently sticky to retain the device temporarily on the surface, but sufficiently releasable to permit the device to be removed from the surface without causing damage to the surface.

A particular kind of polymer is known which is made by Pertec Adhesives, under their designation ID1943. This kind of polymer has been used for removing fluff from clothing and the like. When the polymer becomes contaminated, its properties can be restored simply by washing which removes the contamination from the surface of the polymer.

An alternative kind of polymer with suitable properties is marketed by The Leyland and Birmingham Rubber Co. Ltd as Sorbothane (Trade Mark).

The invention will now be described with reference to the accompanying drawings in which:
FIGURE 1 is an illustrative view of the underside of a device according to the invention;
FIGURE 2 is an illustrative cross-sectional view of the device of Figure 1;
FIGURE 3 is an illustrative side view of the device of Figure 1, and,
FIGURE 4 is an illustrative plan view of the device of Figure 1.

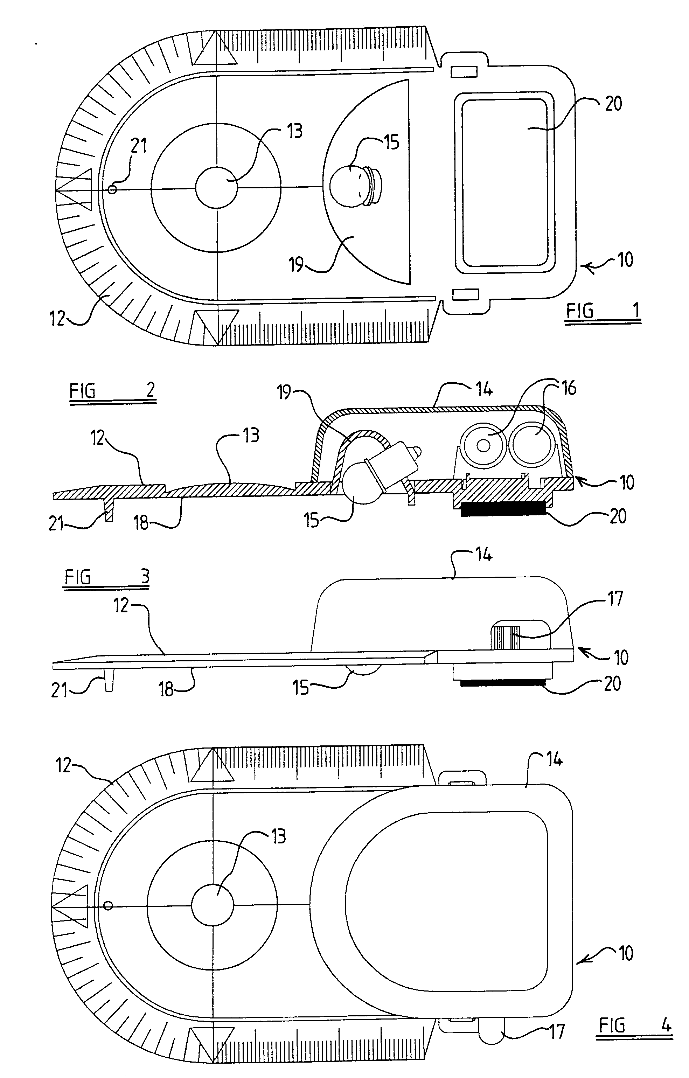

Referring to the drawing, there is shown a device 10 which is adapted to be placed on a generally horizontal surface, comprising in this example, part of a map (not shown), and temporarily retained in a set position on the surface. The device 10 comprises a body 12 which in this example comprises a substantially planar element of generally transparent plastic material e.g. Perspex, which includes an integral lens part 13 which magnifies part of the map immediately beneath the lens part 13. The body 12 may bear graduations and arrows about its outer periphery as shown in Figures 1 and 4, however, alternative markings may be used.

The device 10 further comprises a housing 14 which incorporates within it a light source 15. In this example, the light source 15 is adapted to be supplied with power from batteries 16, also located within the housing 14, and controlled by means of a switch 17. However, embodiments of devices according to the invention may be constructed which are adapted to be supplied with power externally of the body 12, for example from a cigarette lighter or other power point within a vehicle. To this end, a power cable may extend from the housing 14 to the power point.

The light source 15 is surrounded by a reflective element 19, and protrudes from the underside 18 of the body 12. By virtue of the transparency of the plastic material of the substantially planar element of the body 12, the light source 15 illuminates substantially the entire body 12, and particularly, that part of the map 11 immediately beneath the body 12.

On its underside 18, the device 10 comprises a pad 20 located beneath the housing 14, and preferably beneath the batteries 16. The pad 20 may be mechanically interlocked e.g. entrapped in a re-entrant recess on the underside 18 of the device 10, and/or may be adhered in position by a suitable adhesive, but in any event is secured at the underside 18 of the device 10 by some securing means additional to the inate stickyness of the material of the pad 20. The pad 20 is made of a polymer with sticky properties such that when the device 10 is placed on the map in a set position, the device 10 is retained in that position notwithstanding that the map may be vibrated and moved. The polymer is solid at room temperature.

The body 12 further comprises a peg 21 at its end distant from the housing 14. The peg 21 holds the body 12 off the map by the same distance as the pad 20, thus permitting the light source 15 to illuminate the map below the body 12.

Two suitable kinds of polymer are that produced by Pertec Adhesives under their designation ID1943 and that sold by The Leyland and Birmingham Rubber Co. Ltd. and marketed as Sorbothane (Trade Mark). Such polymers are sticky but not so sticky that they are likely to cause any damage to the surface of the map when the device 10 is removed. The pad 20 is sufficiently sticky that the device 10 would be retained in its set position even if the map is inclined to the horizontal to a significant degree, namely up to 45° or even more.

In use, the pad 20 may become contaminated by dust and fluff. To restore the sticky properties of the polymer, the pad 20 may simply be washed in water to remove the contamination.

Various modifications are possible without departing from the scope of the invention.

The body 12 need not comprise an integral lens part 13 if this is not required, and the device 10 may not even comprise a housing 14 for a light source 15.

The body 12 may simply have a marking on it or be formed to a configuration of a marking e.g. a pointer, so that when placed on the map the marker consistently points to a particular location on the map to aid a reader of the map in re-finding a location after having diverted his eyes from the map.

The device 10 may be capable of being marked with a suitable writing implement. Thus where the body 12 is sufficiently large, a route may be marked on the device 10.

Instead of a pad 20, a plurality of such pads, or a single element such as a ribbon, or a plurality of ribbons of sticky polymer may be provided, secured to the underside 18 of the device 10. Alternatively, an element or elements of polymer may be provided in another configuration. Additional pegs 21 may be provided to support the body 12 as necessary, or the peg 21 may be omitted if not required.

It will be appreciated that the device 10 will be retained on the surface notwithstanding that the surface may be vibrated, inclined, or otherwise moved. Where the surface is inclined, the ability of the device 10 to be retained, will depend upon the weight of the device 10 and the area of polymer pad 20 or other element in contact with the surface.

Although the invention has been described in relation to a device for placing on a map, such a device may of course be used on any surface where it is desired to retain a marker or any other device in a set position, temporarily.

## Claims

1. A device (10) adapted to be placed on a surface (11) and temporarily retained in a set position on the surface (11), characterised by a body (12) comprising a generally transparent part (12-13) through which the surface (11) on which the device (10) is placed can be viewed, and the device (10) having secured on its underside by securing means, one or more elements (20) comprising a polymer with sticky properties which is solid at room temperature.

2. A device according to claim 1 characterised in that the transparent part of the body includes a lens part (13) which is adapted to magnify print on the surface (11) beneath the body (12).

3. A device according to claim 1 or 2 characterised in that the generally transparent part (12-13) bears a marking which in use can be aligned with a particular feature present on the surface (11).

4. A device according to any one of claims 1 to 3 characterised in that the generally transparent part (12-13) is formed of transparent plastics material and is substantially planar.

5. A device according to any one of claims 1 to 4 characterised in that the securing means comprises an adhesive to bond the element(s) (20) to the body (12,13).

6. A device according to any one of claims 1 to 4 characterised in that the securing means comprises a mechanical interlocking means which secures the element(s) (20) to the body (12-13).

7. A device according to any one of claims 1 to 6 characterised in that the device includes a housing (14) containing a light source (15).

8. A device according to claim 7 characterised in that the housing (14) includes its own battery power supply (16).

9. A device according to claim 7 or claim 8 characterised in that means are provided to deliver power to the light source from a remote location.

10. A device according to any one of claims 1 to 9 wherein the polymer is of the kind or similar to that produced by Pertec Adhesives under their designation ID1943, or that sold by The Leyland and Birmingham Rubber Co. Ltd. under their designation Sorbothane (Trade Mark).
